# EUROPEAN PATENT APPLICATION

(11) **EP 2 565 340 A1**
(43) Date of publication of application: **06.03.2013**
(21) Application number: 12006204.7
(22) Date of filing: 31.08.2012
(51) Int. Cl.: E04D 3/35, H01L 31/048, H01L 31/02

(54) **Roof covering**

(30) Priority: 31.08.2011 NL 1039016
(71) Applicant: Veenstra, Lucas Jan, 8332 LB Steenwijk (NL); Padmos, Jan Cornelis Willem, 4451 NV Heinkenszand (NL)
(72) Inventor: Veenstra, Lucas Jan, 8332 LB Steenwijk (NL); Padmos, Jan Cornelis Willem, 4451 NV Heinkenszand (NL)
(74) Representative: Griebling, Onno

(57) **Abstract**

A roof covering element (100) is described, comprising:
an insulating body (110);
a water-tight cover plate (150) attached to an upper face of the insulating body (110);
a flexible solar foil (160) arranged on the cover plate (150). In its front face (112), the insulating body has a groove-shaped recess (115), and has a recess (125) in a corner area between its rear face (113) and its lower face (111), in such a manner that a rear end of the roof covering element fits in the groove-shaped recess (115) of a roof covering element laying above.
At a first end of the roof covering element, the solar foil (160) is provided with two electrical connections (161, 162) at the upper side of the foil. At the opposite end, the cover plate (150) extends to beyond the body (110) and may overlap with the electrical connections (161, 162) of a neighboring roof covering element.

## Description

The present invention relates to roof covering elements, particularly for sloping roofs.

Traditionally, roofing tiles are used for covering sloping roofs of houses. The tiles are applied in horizontal rows, wherein always one tile is partially overlapped by its neighbor. Further, each tile is partially overlapped by a tile from a higher row. Thus a covering is constituted that is water-tight as good as possible. On the other hand, roofing tiles must be able to withstand wind: they are not allowed to blow away. Therefore, roofing tiles are made of a heavy material such as concrete, ceramics or the like. Typically, concrete roofing tiles have sizes of about 30 cm x 40 cm and a weight of about 4 kg. This means, that placing tiles on a roof is relatively hard labor.

The present invention aims to improve on this traditional product.

In the first place, the present invention aims to provide a roof covering element having lower weight and being easier to handle.

It is also known to arrange solar panels on roofs for utilizing solar energy. Esthetically, this is not a nice appearance. Therefore, it is also an objective of the present invention to solve this problem.

The present invention provides a roof covering element having the size of two or more roofing tiles next to each other or above each other. The element has a waving upper surface, to give the appearance of roofing tiles, with integrated insulation below that. The upper surface can be made or coated in any desirable color; preferably, the upper surface is made of plastics. The material of the roof covering elements is especially light weight, so that handling the roof covering elements is relatively simple. Therefore, it is possible that the roof covering elements cover a surface corresponding to multiple roofing tiles, so that covering a roof can be done relatively fast. In order to assure that the roof covering elements keep laying well on the roof in the case of strong wind, despite their low weight, the roof covering element in one or more places is screwed to a mounting rail mounted on the roof.

A flexible foil is arranged on the upper surface, provided with flexible solar cells for converting sunlight to electrical energy. Since such flexible solar cells are known per se, a further explanation is not necessary.

Dutch patent 1005287 describes a regular roofing tile that at its upper side is provided with a flexible solar cell. This roofing tile still has the disadvantages of a relatively large weight, and is not provided with integrated insulation. This patent does not give any detailed information on the structure of possible contacts.

These and other aspects, features and advantages of the present invention will be further clarified by the following description with reference to the drawings, in which same reference numerals indicate same or similar parts, and in which:
figure 1A schematically shows a horizontal cross section of a classic roofing tile;
Figure 1B schematically shows a vertical cross section of a classic roofing tile on a sloping roof;
figure 2 schematically shows a perspective view of an embodiment of a roof covering element according to the present invention;
figure 3 schematically illustrates placing roof covering elements according to the present invention;
figure 4 shows a schematic cross section of an embodiment of a ridge according to the present invention;
figure 5 is a schematic perspective view showing two roof covering elements according to the present invention on a sloping roof;
figure 6 is a perspective view showing details of the roof covering elements of figure 5;
figure 7 is a perspective view showing details of the roof covering elements of figure 5;
figure 8 is a schematic cross section showing details of the connection of two roof covering elements to each other; figure 9 is a schematic cross section of a mounting rail.

In the following description, in which indications "under/above", "higher/lower", "left/right" etc. will in general only relate to the orientation shown in the figures, however, confusion might arise in relation to such indications in the context of a sloping roof. Therefore, for sake of clarity, a system of XYZ-directions will be used in the following, defined as follows.

An X-direction is defined as a horizontal direction laying in the plane of the roof. This will be the direction in which tile laths extend. Roofing tiles are placed "next" to each other in the X-direction.

A Y-direction is defined as a direction laying in the plane of the roof and perpendicular to the X-direction. Thus, this direction makes an angle with the horizontal, corresponding to the angle of the roof. In Y-direction, roofing tiles are "above" or "below" each other.

A Z-direction is defined as a direction perpendicular to the plane of the roof.

When a flat plate is laid down horizontally, one can easily indicate an upper face and a lower face. One can split this plate in two by means of a horizontal plane, and thus define an "upper" half and a "lower" half. When this same plate is laid down on a sloping roof plane, the edge directed to the ridge will be located at a higher level than the edge directed to the roof-gutter. Now, one can split this same plate in two by means of a plane directed perpendicular to the plane of the roof, and thus define an "upper" half and a "lower" half. In the following, this distinction will be expressed by using wording "upper/lower in Z-direction" and "upper/lower in Y-direction", or similar expressions.

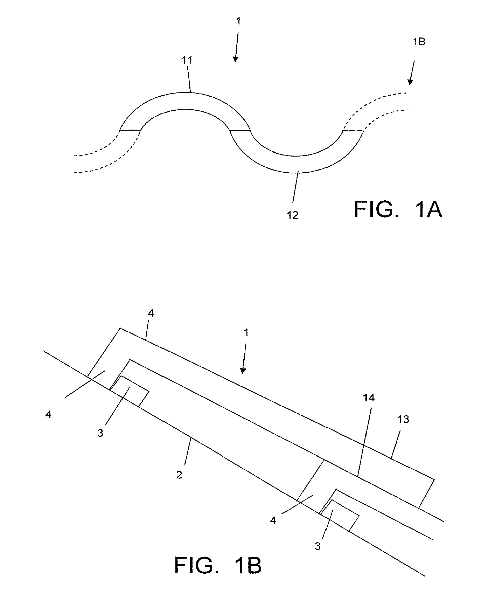

Figures 1A and 1B schematically illustrate a classic concrete roofing tile 1. Horizontal tile laths 3 are attached to a roof 2. A roofing tile 1 is laid on the roof 2, and at its Z-lower side it has a projection 4 hooking behind the tile lath 3 at the Y-upper side. In Y-view (figure 1A), the roofing tile 1 has a wave shape, although other shapes are also possible. At its X-left side, the roofing tile 1 is Z-higher ("mountain" 11) than at its X-right side ("valley" 12). A neighboring tile 1B is always placed to the right of the previous tile 1, partly overlapping over the previous tile 1. After a horizontal row, a next horizontal row of tiles can be arranged Y-above the previous horizontal row, wherein a Y-lower part 13 of a next tile always Z-overlaps with a Y-upper part 4 of a previous tile. Since standard concrete roofing tiles are pretty heavy, covering a roof with roofing tiles is a time-consuming and hard labor. Furthermore, if it is desired to provide the roof with insulation, it is necessary to first arrange insulation material before the roofing tiles can be laid down.

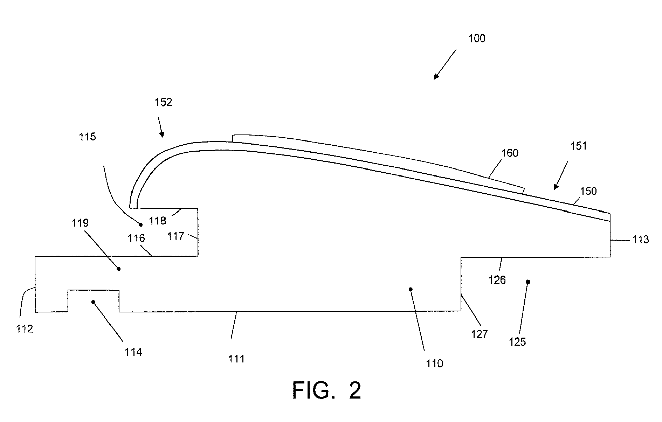

Figure 2 schematically shows a cross section of a roof covering element 100 according to the present invention. The roof covering element 100 comprises a body 110 made of a thermally insulating material, a cover plate 150 attached to the Z-upper surface of the body 110, and a solar foil 160 attached to the cover plate 150.

The insulating body 110 may for instance be made of PU, EPS, EPP, or other similar materials, and the materials may as desired be thermo-hardening or thermo-plastic. The figure shows that the body 110 has a horizontal lower face 111, a substantially vertical front face 112, and a substantially vertical rear face 113. In the front face 112, the body 110 has a groove-shaped recess 115, with a substantially horizontal bottom 116, a substantially vertical rear wall 117 and an upper wall 118. The body part between the bottom 116 and the lower face 111 will be indicated as step 119.

The body 110 has a recess 114 in the lower face 111, at a relatively short distance from the front face 112 and below the groove-shaped recess 115.

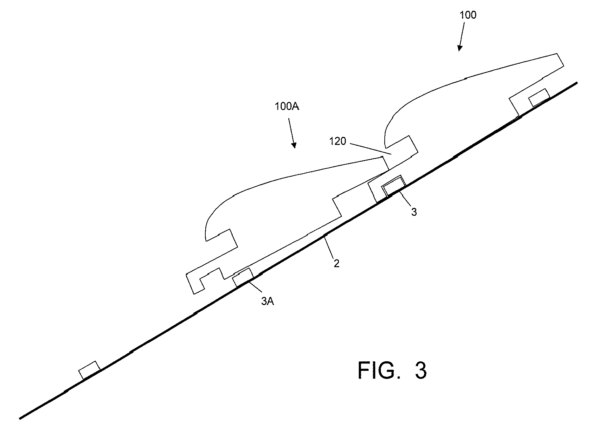

As shown in figure 3, the roof covering element 100 in practice is placed on a sloping roof in such a way that its front face 112 is directed Y-downwards, wherein a tile lath 3 fits in the recess 114 extending in X-direction. The roof covering element 100 may be fixed to the tile lath 3 by a screw or nail 120 which is screwed or hammered into the bottom 116, through the step 119, into the tile lath 3. In order to make possible the screwing or nailing, the Y-dimension of the upper wall 118 is smaller than the Y-dimension of the bottom 116, so that the step 119 in Y-direction extends beyond the front edge of the upper wall 118, wherein the recess 114 is located in this projecting part of the step 119.

Then a subsequent roof covering element 110A is placed, in Y-direction below the previous roof covering element 100, wherein the rear end of the subsequent roof covering element 100A Z-overlaps the step 119 of the previous roof covering element 100. To this end, the roof covering element 100 at its rear side has a recess 125 into which the step 119 fits of a roof covering element 100 laying Y-above. This recess 125 has an upper wall 126 and a side wall 127. The upper wall 126 of the recess 125 comes to lay Z-on the bottom 116 of the groove-shaped recess 115, in other words Z-on the upper face of the step 119. The subsequent roof covering element 100A is shifted to Y-above, with its rear side over the step 119, until its recess 114A is located Z-above the corresponding tile lath 3A. Now the front side of the subsequent roof covering element 100A can be Z-lowered, so that the corresponding tile lath 3A gets into the recess 114A. It may be clear that the actions required for placing the roof covering elements are relatively simple.

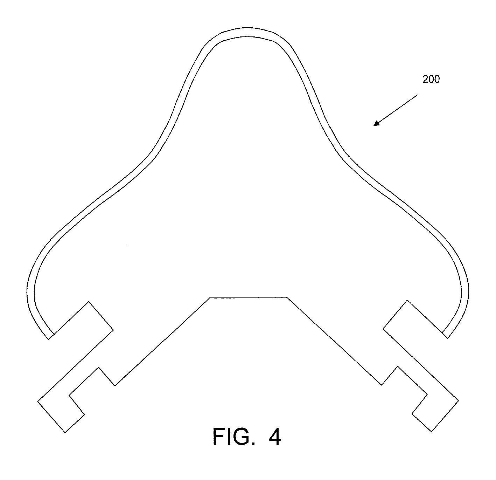

The above steps are repeated to cover the roof plane with elements 100 from Y-above to Y-below. Herein, it is advantageous that one has to start at the top of the roof, because this allows one to find support on the uncovered roof plane. If one would have to work upwards from below, one would always have to lean or walk on roof covering elements already laid down. One starts by laying a ridge tile 200 onto the ridge of the roof. On a symmetrical roof, also the ridge tile is symmetrical, and in fact it consist of two times the lower half of a roof covering element, as schematically shown in figure 4.

As appears from the above, the rear end of a subsequent roof covering element 100A is always placed in the groove-shaped recess 115 of the roof covering element 100 laying directly Y-above (or in the corresponding recess of a ridge tile). Herein, the upper wall 118 of this groove-shaped recess 115 will always Z-overlap a rear part 151 of the covering plate 150, and will lay sealingly against it when correctly dimensioned. The cover plate 150 is made of a water-tight and weather-resistant material, for instance polyester, but this may also be for example metal. The cover plate 150 is attached to the body 110 in any suitable manner, for instance by gluing, hot melt, welding, etcetera. The cover plate 150 extends from the rear side 113, via a curve part 152, to the front edge of the upper wall 118 of the groove-shaped recess 115.

It is the cover plate 150 that is still visible from outside when all roof covering elements are placed, with the exception of the rear part 151 thereof, which is Z-overlapped by a neighbor laying Y-above. Thus, it is the form and color of the cover plate 150 that determine the visual appearance of the finished roof to an important extent. In principle, it is possible to give the cover plate 150 an arbitrary shape, for instance flat. However, according to an important aspect of the present invention, the cover plates 150 give the visual suggestion of traditional roofing tiles. To that end, the cover plates 150 have a wavy shape in X-direction, perpendicular to the plane of drawing of figure 2, as will be clarified later.

A flexible solar foil 160 is attached, for instance by gluing, on the cover plate 150, over almost the entire X-length thereof. Since such foil is known per se, a further description of this foil is not needed. Suffice it to note that the foil is capable of converting received solar radiation to electrical energy, and is provided with two electrical connections for delivering this electrical energy, as will be described in more detail later.

Thus, each roof covering element is a unit combining the functions of roof covering, insulation and generating electricity.

It has been described in the above how the roof covering elements overlap each other in Y-direction. In the following, it will be described how the roof covering elements overlap each other in X-direction, and how the electrical connection of the different roof covering elements has been configured.

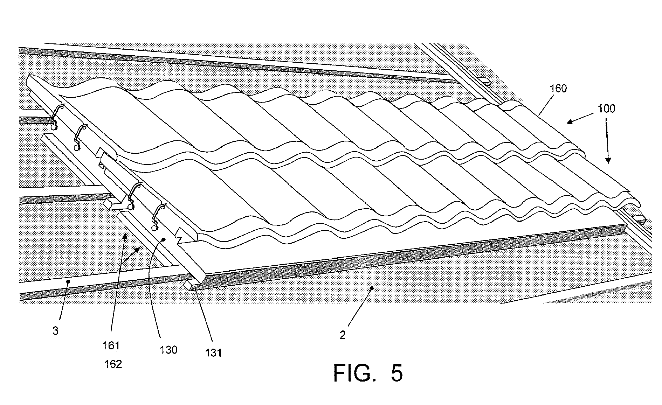

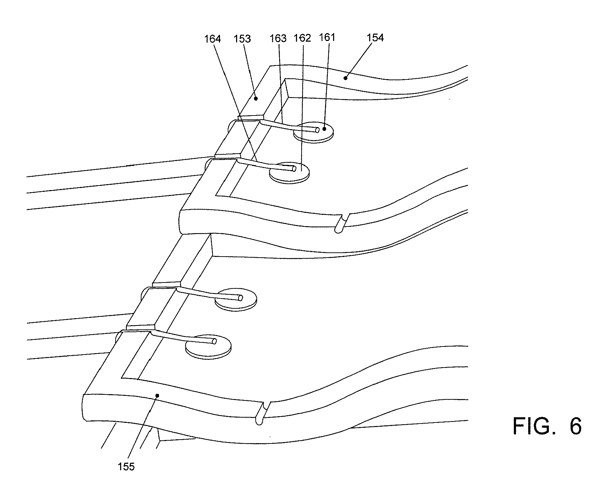

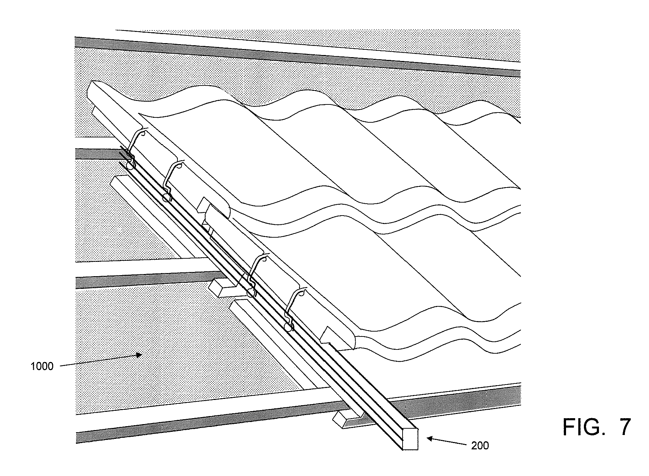

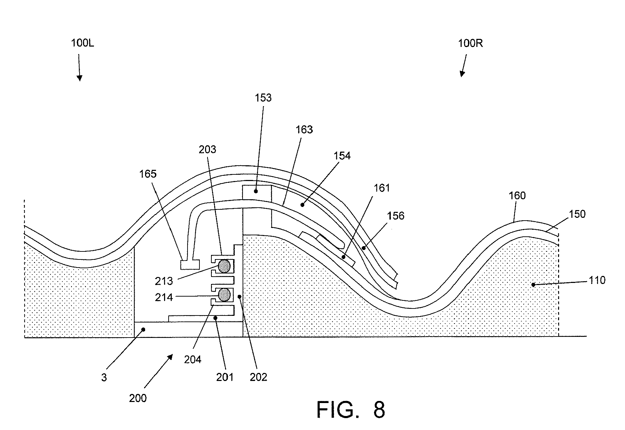

Figure 5 is a schematic perspective view of a sloping roof 2 with tile lath 3, onto which two roof covering elements 100 according to the present invention are placed. The figure clearly shows that the upper surface of each roof covering element has a wavy shape in X-direction wherein, looking Y-upwards from the Y-lower side of the roof, each roof covering element ends on the top of a wave crest at the X-left side, and that the solar foil 160 is provided with two electrical connections 161, 162. Figure 6 is a perspective view on larger scale as compared to figure 5, showing the left ends of the two roof covering elements 100. Figure 7 is a perspective view on larger scale as compared to figure 5, showing more details of the connections 161, 162. Figure 8 is a schematic cross section according to an XZ-plane of the interface of two roof covering elements laying next to each other in X-direction.

Where necessary, specific distinction will be made in the following between the left roof covering element and the right roof covering element by providing the respective reference numerals with additions "L" and "R", respectively.

Apart from the roof covering element 100, a roof covering system 1000 according to the present invention comprises a system of mounting rails 200. A mounting rail 200 is always attached on the tile lath 3, with its longitudinal direction directed in the Y-direction. This mounting rail 200 serves as guide and stop for positioning the right hand roof covering element 100R. Further, the mounting rail 200 serves as carrier for two electrical lines, insulated with respect to each other. Alternatively, two mounting rails might be used, each carrying a single electrical line. It is also possible to use a separate positioning guide and one or two separate electrical rails.

As shown in figure 9 at a larger scale, the mounting rail 200 in the embodiment shown has a general L-shaped cross section, with a horizontal foot 201 and a vertical body 202. The foot 201 of the mounting rail 200 is mounted on the tile lath 3, with the foot 201 directed to the left. At the side of the foot 201, i.e. at the side directed away from the right hand roof covering element 100R, the body 202 is provided with two tubular chambers 203, 204, with an electrical line 213, 214 in each chamber. The mounting rail 200 may be made of plastics; in that case the walls of the chambers 203, 204 are intrinsically insulating. It is also possible that the mounting rail 200 is made of metal, for instance aluminium; in that case, the electrical lines 213, 214 will be insulated lines.

At its left hand end, the right hand roof covering element 100R is provided with an upstanding edge 153. At the rear side 113 and at the front side 112, an upstanding edge 154, 155 connects thereto, of which the height, going into the X-direction, gradually decreases to zero. These upstanding edges define a protected space on the upper surface 150 within which the connection pads 161, 162 of the solar foil 160 are located. From each connection pad 161, 162, a corresponding connection wire 163, 164 departs to the mounting rail 200, via a recessed part in the upstanding edge. Each connecting wire is provided with a connector 165, 166, for coupling with an electrical line 213, 214. After placing the right hand roof covering element 100R, the mechanic will connect the two connectors 165, 166 with the respective electrical lines 213, 214 in the mounting rail 200, taking account of plus and minus. Preferably, code markings are provided to reduce the chance on mistakes, for instance a color code.

Over its entire length the rail 200 offers the opportunity for making a coupling with the connection wires 163, 164. The exact location where the coupling is made is not critical, and this among other things has the large advantage that the precise length of the connection wires 163, 164 is not critical.

Further, the manner in which the coupling is made is not critical. In a possible embodiment, the connectors 165, 166 attached to the connecting wires 163, 164 are simple banana plugs, and the system is provided with banana contra plugs 170 to be fixed to the rail 200. Each banana contra plug 170 at its one end has a receptacle 171 for receiving a banana plug, and at its other end has a screw 172 with which the banana contra plug 170 is screwed on the rail 200 and penetrates the line 213 or 214 in doing so, wherein the contra plug 170 seals the respective chamber 203, 204 in a water-tight manner.

It is noted that it is also possible that the connecting wires 163, 164 are provided with female connectors and that male connectors are screwed onto the rail 200.

It is further possible that connecting wires of the one polarity are provided with female connectors and that the connecting wires of the other polarity are provided with male connectors, or vice versa, with matching male connectors and female connectors, respectively, on the rail. In that case, the chances on errors in the case of connecting are almost zero. Further, it is now possible to connect the solar foils in series in a simple manner, i.e. by coupling the male connector of the one foil to the female connector of the other foil.

After placing all right hand roof covering elements, they are thus all coupled to each other electrically, in series and/or in parallel. Their combined output current is transported by the electrical lines 213, 214, for instance to the Y-upper end of the mounting rail 200, where these lines are guided to a space below the roof via an opening in the roof, where equipment is located for further processing the generated electrical energy, as known per se and therefore not shown in more detail. Typically, such apparatus comprises a converter, for converting the direct voltage from the solar foils to 230V alternating voltage of the grid. It is also possible to store energy in batteries.

In figure 8 the left hand end of the right hand roof covering element 100R is shown as being completely flat. This indeed is a possible embodiment. It is however also possible that the right hand roof covering element 100R in its left end is provided with a recess 130, into which the mounting rail 200 fits entirely or partly, as shown in figure 5. In that case a part 131 of the body 110R laying below said recess will extend below the mounting rail 200 attached to the tile lath 3, thus achieving a positional confinement of the left hand end of the right hand roof covering element 100R.

It is shown in figure 8 that the right hand end 156 of the left hand cover plate 150L extends over the left hand end of the right hand roof covering element 100R. To this end, over an X-distance that is sufficiently large, the body 110L at the right hand end 156 of the left hand roof covering element 100L is missing. In the example shown, each roof covering element 100 at its left hand side ends at a wave crest, so that there is sufficient Z-space for placing the mounting rail 200. In this example, the right hand end 156 of the left hand roof covering element 100L ends with a wave valley, and the free part of the right hand end of the left hand cover plate 150L corresponds with three quarters to an entire wave length. It is possible that the free right hand end 156 of the left hand cover plate 150L continues further to the right, beyond the wave valley, but this is not necessary and it is not preferred since the free right hand end 156 of the left hand cover plate 150L would then become more vulnerable.

It is shown in figure 6 that the upright edges extending in Z-direction at the rear side 113 and front side 112 continue in X-direction to beyond the lowest point of the first wave valley. In such case, it is preferred to provide the upstanding edges extending in the X-direction at the front side 112, at the lowest point of the first wave valley, with a lowering directed in the Y-direction, to thus allow rain water the opportunity to flow away from the first wave valley.

It can be seen in figure 8 that the solar foil 160 continues to the left to beyond the final wave valley from the right, so that the connection pads 161, 162 lie somewhat higher then the lowest point of the first wave valley from the left.

Thus, the present invention provides a roof covering element 100, comprising: an insulating body 110; a water-tight cover plate 150 attached on an upper face of the insulating body 110; and a flexible solar foil 160 arranged on the cover plate 150. The insulating body in its front face 112 has a groove-shaped recess 115, and in the corner area between its rear face 113 and its lower face 112 has a recess 125, such that a rear end of the roof covering element fits in the groove-shaped recess 115 of a roof covering element laying above. At a first end of the roof covering element, the solar foil 160 is provided with two electrical connections 161, 162 at the upper side of the foil. At the opposite end, the cover plate 150 extends to beyond the body 110 and may overlap with the electrical connections 161, 162 of a neighboring roof covering element.

It will be clear to a person skilled in the art that the invention is not limited to the exemplary embodiments discussed in the above, but that several variations and modification are possible within the protective scope of the invention as defined in the attached claims. In the example shown, the roof covering element has an X-dimension of about 3 m and a Y-dimension of about 40 cm, which dimensions correspond to a horizontal row of 10 standard concrete roofing tiles. The design may be amended to give the appearance of roofing tiles of another type. It is further possible to choose the X-dimension larger or smaller, to thus correspond to more or fewer roofing tiles next to each other. It is also possible to choose the Y-dimension larger, and designwise give the visual impression of two or even more rows of roofing tiles above each other.

In the example shown, the roof covering element at its left hand end has a wave valley and has a wave crest at its right hand end, wherein the connections of the solar foil are located at the left hand side. In the case of such embodiment, one will work on the roof from the right to the left, wherein always the right hand end of a subsequent roof covering element is placed overlapping with the left hand end of its right hand neighbor. It is however also possible to implement the roof covering elements in a mirrored manner, in which case one works on the roof from the left to the right.

It is further noted that it is not necessary that all elements placed on a roof are provided with solar foil.

The reference numerals used in the claims exclusively serve for clarification when understanding the claims in the light of the exemplary embodiments discussed, and should be interpreted in no way in a limiting manner.

## Claims

1. Roof covering system (1000), comprising:
- a plurality of roof covering elements (100), wherein each covering element comprises:
= an insulating body (110) with a lower face (111), a front face (112) and a rear face (113);
= a water-tight cover plate (150) attached to an upper face of the insulating body (110);
= a flexible solar foil (160) arranged on the cover plate (150);
wherein the insulating body in its front face (112) is provided with a groove-shaped recess (115), with a bottom (116), a rear wall (117) and an upper wall (118), wherein the distance between the rear wall (117) and a front edge of the upper wall (118) is smaller than the distance between the rear wall (117) and a front edge of the bottom (116);
wherein the insulating body in a corner area between its rear face (113) and its lower face (111) is provided with a recess (125) with an upper wall (126) connecting to the rear face (113) of which the width corresponds to the width of said bottom (116), and with a side wall (127) connecting to the lower face (111) of which the height corresponds to the vertical distance between the lower face (111) and the bottom (116);
wherein a rear end of the roof covering element fits in the groove-shaped recess (115) of a roof covering element laying above;
wherein at a first end of the roof covering element, the solar foil (160) is provided with two electrical connections (161, 162) at the upper side of the foil, to which two electrical connection conductors (163, 164) are connected which at their free ends are provided with connectors (165, 166);
wherein at the opposite end the cover plate (150) extends to beyond the body (110) and may overlap with the electrical connections (161, 162) of a neighboring roof covering element;
- at least one guide rail (200), destined for mounting perpendicular to tile laths (3), which guide rail (200) carries two electrical conductors (213, 214) electrically insulated with respect to each other, to which the said connectors (165, 166) can be coupled.

2. Roof covering system according to claim 1, wherein the insulating body (110) in its lower face (111), in the part laying between its front face (112) and the front edge of the upper wall (118), is provided with a recess (114) for accommodating a tile lath (3).

3. Roof covering system according to claim 1 or 2, wherein the cover plate (150) with the solar foil (160) attached thereon has a wavy contour.

4. Roof covering system according to claim 3, wherein the roof covering element has the visual appearance of multiple roofing tiles next to each other and/or above to each other.

5. Roof covering system according to claim 3 or 4, wherein the first end of the roof covering element corresponds to a wave crest.

6. Roof covering system according to claim 5, wherein the opposite end of the roof covering element corresponds to a wave valley.

7. Roof covering system according to claim 6, wherein the cover plate (150) at the said opposite end of the roof covering element extends beyond the body (110) over a distance which at least corresponds to the distance of the free end of the cover plate (150) to the first wave crest.

8. Roof covering system according to any of the previous claims, wherein each roof covering element at its said first end is provided with a recessed part (130) for at least partially accommodating the guide rail (200).

9. Roof covering system according to any of the previous claims, wherein the guide rail (200) has an L-shaped contour with a foot (201) and a body (202), and wherein the said electrical conductors (213, 214) are arranged at the side of the body (202) directed to the foot (201).

10. Roof covering system according to any of the previous claims, wherein separate contra connectors (170) are provided, to be attached to the guide rail (200), matching to said connectors (165, 166), which contra connectors (170), on attachment to the guide rail (200), make electrical contact with one of the said electrical conductors (213, 214) in a water-tight manner.
